# EUROPÄISCHE PATENTSCHRIFT

(11) **EP 2 198 995 B1**
(45) Veröffentlichungstag und Bekanntmachung des Hinweises auf die Patenterteilung: **04.07.2012**
(21) Anmeldenummer: 09179602.9
(22) Anmeldetag: 17.12.2009
(51) Int. Cl.: B23B 31/12, B23B 31/16, B25B 1/08, B25B 1/24

(54) **Spanneinrichtung sowie Verfahren zum Verbinden einer Spannbacke mit einer Spanneinrichtung**
Clamp and method for connecting clamping jaws to a clamp
Dispositif de serrage ainsi que procédé de connexion d'une mâchoire de serrage dotée d'un dispositif de serrage

(30) Priorität: 18.12.2008 DE 102008064525
(43) Veröffentlichungstag der Anmeldung: 23.06.2010
(73) Patentinhaber: Hainbuch GmbH Spannende Technik, 71672 Marbach (DE)
(72) Erfinder: Weller, Hans-Michael, 71563 Affalterbach (DE); Mandarello, Attilio, 71563 Affalterbach (DE)
(74) Vertreter: Patentanwälte Ruff, Wilhelm, Beier, Dauster & Partner

(56) Entgegenhaltungen:
- EP-A1- 1 704 010
- CA-A1- 962 826
- FR-A5- 2 119 685
- US-A- 2 464 625
- US-A- 6 012 712

## Beschreibung

### Anwendungsgebiet und Stand der Technik

Die Erfindung betrifft eine Spanneinrichtung sowie ein Verfahren zum Verbinden einer Spannbacke mit einem Spannbackenträger einer solchen Spanneinrichtung.

Eine derartige Spanneinrichtung ist beispielsweise aus der EP 1704010 A1 bekannt. Sie weist vier Spannkopfsegmente auf, die von Aufnahmeteilen aufgenommen sind. Hierzu sind die Spannkopfsegmente in einem von den Aufnahmeteilen umschlossenen Bereich angeordnet. Die Aufnahmeteile sind kreisförmig um eine Ausnehmung herum angeordnet und weisen je einen keilförmigen Abschnitt auf, an dem die Spannkopfsegmente anliegen und mittels dem die Spannkopfsegmente aufgrund einer Spannbewegung in eine spannende Position überführt werden.

In der FR 2 119 685 A5 ist ebenfalls ein Spannfutter beschrieben. Das Spannfutter weist eine Mehrzahl von Führungen auf, in denen Stangen angeordnet sind. Mit den Stangen ist je eine Klemmbacken mittels Schraubbolzen sowie hinterschnittartig ausgebildeter Zunge verbunden. Die Führungen verlaufen schräg zu einer Mittellängsachse des Spannfutters.

In der EP 1 704 010 A1, ist eine Spanneinrichtung mit mehreren Spannkopfsegmenten beschrieben. Die Spannkopfsegmente berühren innere Aufnahmeteile mit Kontaktflächen. Die Kontaktflächen sowie die Gegenkontaktflächen der Aufnahmeteile sind schräg zu einer Spannrichtung ausgerichtet.

In der US 6,012,712 A ist eine Spannvorrichtung zum gleichzeitigen Spannen von zwei Werkstücken beschrieben. Diese weist Spannköpfe auf, mit denen Spannkörper verbunden sind. Zwischen dem Spannkörper und dem Spannkopf ist ein Hinterschnitt mittels einer Halbkugelform am Spannkörper sowie einer halbkugelförmigen Ausnehmung am Spannkopf gebildet. Zusätzlich ist die Verbindung mittels einer Schraube gesichert.

### Aufgabe und Lösung

Der Erfindung liegt die Aufgabe zugrunde, eine Spanneinrichtung bzw. ein genanntes Verfahren bereitzustellen, mit denen die Anpassungsfähigkeit des spannenden Bereiches einer Spanneinrichtung gegenüber dem Stand der Technik einfacher an sich unterscheidende Außenkonturen von zu spannenden Gegenständen anpassen lässt.

Gelöst wird diese Aufgabe durch eine Spannvorrichtung mit den Merkmalen des Anspruchs **1** sowie durch ein Verfahren mit den Merkmalen des Anspruchs 15. Vorteilhafte sowie bevorzugte Ausgestaltungen der Erfindung sind Gegenstand der weiteren Ansprüche und werden im folgenden näher erläutert. Der Wortlaut der Ansprüche wird durch ausdrückliche Bezugnahme zum Inhalt der Beschreibung gemacht. Manche der nachfolgenden, jedoch nicht erschöpfend aufgezählten Merkmale und Eigenschaften treffen sowohl auf die Spanneinrichtung als auch auf das Verfahren zu. Sie werden teilweise nur einmal beschrieben, gelten jedoch unabhängig voneinander und in beliebiger Kombination sowohl für die Spanneinrichtung als auch für das Verfahren. Weiterhin ist die Reihenfolge der aufgelisteten Merkmale nicht bindend, sondern kann vielmehr entsprechend einer optimierten Spanneinrichtung bzw. eines optimierten Verfahrens geändert werden.

Erfindungsgemäß weist eine Spanneinrichtung mehrere Spannmittelaufnahmen auf mit jeweils wenigstens einem von der Spannmittelaufnahme aufgenommenen Spannelement, wobei jede Spannmittelaufnahme wenigstens einen Bereich aufweist, der schräg zu einer Spannrichtung der Spanneinrichtung verläuft und mittels dem das wenigstens eine Spannelement zumindest teilweise geführt ist. Das Spannelement weist einen Spannbackenträger sowie eine Spannbacke auf, die mit dem Spannbackenträger verbindbar ist, wobei die Spannbacke im mit dem Spannbackenträger verbundenen Zustand in einen am Spannbackenträger vorgesehenen Hinterschnitt eingreift und zusätzlich mittels einer kraftschlüssigen und/oder formschlüssigen Fixierung an dem Spannbackenträger fixiert ist. Aus der erfindungsgemäßen Ausgestaltung gemäß Anspruch 1 ergibt sich vorteilhaft eine einfache und flexible Anpassbarkeit der. Spanneinrichtung an zu spannende Gegenstände, die die unterschiedlichsten Außenkonturen aufweisen können. Diese Anpassbarkeit wird erreicht, indem die Befestigung der Spannbacken am Spannbackenträger auf einfache Weise vorgesehen ist, nämlich dem Einsetzen eines Abschnittes der Spannbacke in den Hinterschnittbereich des Spannbackenträgers und dem anschließenden Fixieren der Spannbacke in dieser Position. Das Vorsehen der Hinterschnittverbindung ermöglicht es, dass für die Fixierung der Spannbacke am Spannbackenträger lediglich ein einziges Fixierelement vorzusehen ist.

Die Spannmittelaufnahmen können unterschiedlich ausgebildet sein für die Aufnahme der Spannelemente, wobei von den jeweiligen Spannelementen insbesondere der Spannbackenhalter von der Spannmittelaufnahme aufgenommen ist. Besonders bevorzugt ist die Spannmittelaufnahme eine Ausnehmung, deren Kontur so gewählt ist, dass ein Spannbackenhalter dort mit einer sogenannten Gleitsitzpassung aufgenommen werden kann. Hierbei ist es jedoch wenig wichtig, ob sich die Spannmittelaufnahme soweit erstreckt, dass der Spannbackenträger über seine gesamte Längenausdehnung darin angeordnet werden kann oder nicht.

Die Spannrichtung der Spanneinrichtung verläuft erfindungsgemäß im wesentlichen parallel zu einer Mittellängsachse der Spanneinrichtung. Für einen Spannvorgang werden einige Teile der Spanneinrichtung, wenigstens jedoch die Spannelemente, in Spannrichtung bewegt. Durch die schräge Ausgestaltung der Spannmittelaufnahme bewegen sich die Spannelemente je nach Verlauf der Schräge beim Bewegen der Spannelemente in Spannrichtung oder entgegen Spannrichtung aufeinander zu bzw. voneinander weg. Diese Bewegung der Spannelemente aufeinander zu wird für das Spannen zu spannender Bauteile an deren Außenkontur verwendet. Entsprechend wird die Bewegung der Spannelemente voneinander weg zum Lösen der Spannwirkung herangezogen oder gegebenenfalls für das Spannen eines zu spannenden Bauteils an dessen Innenkontur.

Die Spannbacken können erfindungsgemäß im wesentlichen beliebig ausgebildet sein. So können beispielsweise eine oder mehrere im Wesentlichen punktförmige Erhebungen an der jeweiligen Spannbacke vorgesehen sein, die so an der Spannbacke positioniert sind, dass sich die Erhebungen beim Erzeugen der Spannwirkung auf das zu spannende Werkstück zu bewegen. Weitere Möglichkeiten der Ausgestaltung der Spannbacken sind zum Beispiel entsprechende punktförmige und oder linienförmige Ausnehmungen, Kerbungen odgl..

In Ausgestaltung der Erfindung nehmen die Hinterschnitte der Spannbackenträger jeweils Spannkräfte auf, die im wesentlichen parallel zur Fixierung der Spannbacken am Spannbackenträger wirken. Insbesondere verläuft der Vektor dieser Spannkräfte senkrecht zu der Spannrichtung auf einer Mittelebene des Spannelements. So wird die wirkende Spannkraft besser in den Spannbackenträger eingeleitet, als mit lediglich einer Fixierung beziehungsweise mit lediglich einem Auflagepunkt.

In weiterer Ausgestaltung der Erfindung sind die Spannbacken zumindest abschnittsweise im wesentlichen hakenartig ausgebildet. Insbesondere ist diese hakenartige Ausbildung der Spannbacken in dem Bereich der Spannbacken vorgesehen, in dem sie in die Hinterschnitte der Spannbackenträger eingreifen.

In Ausgestaltung der Erfindung ist die Spanneinrichtung mit einem Adapter verbindbar, der hierzu adapterseitige Teile eines Bajonettverschlusses aufweist. Ein derartiger Adapter kann beispielsweise mit einem Maschinenbett odgl. verbunden sein, beispielsweise in einer Fräsmaschine odgl.. Auf diese Weise ist vorteilhaft erreicht, dass der Adapter dauerhaft in der jeweiligen Maschine verbleiben kann und lediglich die Spanneinrichtung an das jeweilige zu spannende Werkstück angepasst werden muss. Der Adapter kann außer mit der erfindungsgemäßen Spanneinrichtung auch mit anderen Vorrichtungen für die Werkstückspannung verbindbar ausgeführt sein, beispielsweise mit so genannten Dornen odgl. zum Aufspannen. Als Bajonettverschluss wird hier eine Verbindungsmöglichkeit verstanden, bei der wenigstens zwei zu verbindende Bauteile mittels einer Linearbewegung zumindest zum Teil ineinander geschoben werden und mittels einer Rotationsbewegung relativ zueinander um eine bestimmte Gradzahl verdreht werden. Durch das Verdrehen greifen dann Abschnitte der wenigstens zwei Bauteile in Hinterschnitte am jeweils anderen Bauteil ein. Ein Bajonettverschluss kann erfindungsgemäß zusätzlich mittels Verschraubungen odgl. gesichert sein, aber auch beispielsweise mittels Federwirkung odgl. vorgespannt werden. Insgesamt ist es selbstverständlich möglich, die Spanneinrichtung mittels anderer Fixiermittel mit dem Adapter zu verbinden und beispielsweise den Bajonettverschluss für das Erzeugen beispielsweise einer Spannwirkung zu verwenden.

Bei der Erfindung weist die Spanneinrichtung eine Kupplung auf, die wenigstens ein erstes Kuppelteil und ein zweites Kuppelteil aufweist, wobei die Kuppelteile unabhängig voneinander und in jeweils verschiedene Spannbackenträger eine Spannkraft einleiten. Die Kuppelteile stehen hierzu mit den Spannelementen in Eingriff, beispielsweise indem Auskragungen der Kuppelteile in Ausnehmungen der Spannelemente, insbesondere des Spannbackenträgers, hineinragen. Dadurch, dass die Kuppelteile eine Spannkraft unabhängig voneinander und in jeweils verschiedene Spannbackenträger einleiten können, können die Spannbackenträger und somit auch die Spannbacken unabhängig von wenigstens einer anderen Spannbacke bzw. einem anderen Spannbackenträger bewegt werden. Auf diese Weise kann ein Werkstück, beispielsweise mit einer unregelmäßigen Außenkontur in dem zu spannenden Bereich, zunächst von beispielsweise zwei Spannelementen gespannt werden, beispielsweise für eine primäre Fixierung, oder zwischen zwei Spannbacken geführt und zwischen den übrigen zwei Spannbacken gespannt werden.

In einer Ausgestaltung der Erfindung sind das erste und das zweite Kuppelteil miteinander koppelbar und die Kupplung weist spanneinrichtungsseitige Teile eines Bajonettverschlusses auf. In weiterer Ausgestaltung der Erfindung sind die Kuppelteile jeweils mit einem Abschnitt des adapterseitigen Bajonettverschlusses verbindbar, der von für andere Kuppelteile vorgesehenen Abschnitten des Bajonettverschlusses unabhängig ist. Diese unabhängigen und voneinander trennbaren Abschnitte des Bajonettverschlusses können beispielsweise in Form von sich zu einem Kreis ergänzenden Kreissegmenten vorgesehen sein. Eine alternative Anordnung dieser Abschnitte kann darin bestehen, zwei voneinander unabhängige und jeweils vollständige Bajonettverschlüsse koaxial zueinander anzuordnen, also einen kleinen, inneren Bajonettverschluss und einen größeren, äußeren Bajonettverschluss. Dabei umgibt der äuβere Bajonettverschluss den inneren Bajonettverschluss zumindest teilweise.

In Ausgestaltung der Erfindung übertragen die Kuppelteile eine Bewegung der Bajonettverschlussabschnitte in oder entgegengesetzt der Spannrichtung auf die Spannbackenträger. Die Bewegung in Spannrichtung oder entgegengesetzt der Spannrichtung erzeugt, wie vorstehend bereits erwähnt, die spannende Wirkung der Spannelemente im Wesentlichen dadurch, dass die Spannelemente entlang der schiefen Ebene geführt werden.

In Ausgestaltung der Erfindung ist eine gerade Anzahl von Spannmittelaufnahmen vorgesehen, vorzugsweise vier. Auf diese Weise können mehreckige, insbesondere nicht rotationssymmetrische Bauteile sicher gespannt werden.

In Ausgestaltung der Erfindung sind die Spannbackenträger wahlweise paarweise oder aber insgesamt zum Erzeugen einer Spannwirkung bewegbar bzw. antreibbar. Es können auch beispielsweise Gruppen von drei, vier oder noch weiteren Spannelementen gemeinsam angetrieben werden. Je nachdem, welche Form der zu spannende Gegenstand aufweist, kann so dieser zu spannende Gegenstand beispielsweise zunächst im Bereich der Spanneinrichtung zentriert werden um dann anschließend endgültig eingespannt zu werden. Es ist ebenfalls vorstellbar, dass drei Spannelemente, die in einem Winkel von 120° zueinander angeordnet sind, gleichzeitig bewegbar sind. Zu dieser Spannung mittels dreier Spannelemente können dann weitere drei Spannelemente für eine zusätzliche Spannwirkung hinzugenommen werden.

Insgesamt können mehrere Spannelemente gleichzeitig oder nacheinander für das Erzeugen einer Spannwirkung angetrieben werden. Die Spannelemente können hierzu miteinander koppelbar oder vollständig unabhängig voneinander bewegbar sein. Die Anzahl vorzusehender Spannelemente kann je nach Größe des zu spannenden Gegenstandes variiert werden. Wie vorstehend bereits erwähnt, können beispielsweise drei Spannelemente ausreichend sein. Je nach Größe, insbesondere je nach Masse bzw. Umfang, des zu spannenden Gegenstandes bzw. nach zu erwartenden Kräften, die bei der Bearbeitung auftreten, können weitere Spannelemente notwendig und sinnvoll sein.

In einer Weiterbildung der Erfindung weist die Spanneinrichtung einen Grundkörper auf, der an einer einem zu spannenden Werkstück zugewandten Stirnseite für die im wesentlichen unbewegliche Aufnahme von Gegenstücken zu den Spannbacken ausgebildet ist. Diese Gegenstücke können beispielsweise Innenwinkel und/oder Platten odgl. sein. Diese Gegenstücken können dann, ähnlich wie die Spannbacken, im Wesentlichen punktförmige Erhebungen, Nuten, Kerben odgl. aufweisen. Die Gegenstücke können beispielsweise auch je eine Innenkontur aufweisen, die zusammengenommen einer Außenkontur eines zu spannenden Werkstückes entspricht. Diese Ausgestaltung erweist sich als vorteilhaft, wenn vergleichsweise großvolumige und/oder schwere Bauteile zu spannen sind, die beispielsweise in einer garantierten und reproduzierbaren Position gespannt sein müssen.

In weiterer Ausgestaltung der Erfindung weist der Grundkörper eine zentrale Ausnehmung wenigstens für die Aufnahme der Kupplungsteile auf, wobei die Ausnehmung mittels eines Verschlussstückes verschließbar ist. Die zentrale Ausnehmung ermöglicht den Zugang zu Bauteilen sowie deren Positionierung im Inneren der Spanneinrichtung. Das Verschlussstück dient insbesondere als Schutz vor Verschmutzung der Bauteile im Inneren der Spanneinrichtung. Darüber hinaus kann dieses Verschlussstück eine gewisse Höhenausdehnung aufweisen, um beispielsweise ein zu spannendes Bauteil in einem mittleren Bereich zu stützen, wenn es von den Spannbacken gehalten ist. Darüber hinaus ist es selbstverständlich auch denkbar, dass die Ausnehmung für die Aufnahme weiterer Spannelemente vorbereitet bzw. vorgesehen sein kann, beispielsweise Spannbuchsen odgl..

In einer weiteren Ausgestaltung der Erfindung ist die Spannbacke im wesentlichen bogenförmig, wobei an einem Endbereich des Bogens ein hakenartiger Abschnitt für den Eingriff in den Hinterschnitt des Spannbackenträgers vorgesehen ist. Der hakenartige Abschnitt erstreckt sich in einem vom Bogen umschlossenen Bereich, vorzugsweise in eine dem Verlauf des Bogens entgegengesetzte Richtung.

Die der Erfindung zugrunde liegende Aufgabe wird außerdem durch ein Verfahren zum Verbinden einer Spannbacke mit einem Spannbackenträger einer Spanneinrichtung gemäß vorstehender Beschreibung gelöst, bei dem die die Hinterschnittverbindung bildenden Bereiche der Spannbacke und des Spannbackenträgers ineinander eingehakt werden. Dabei wird die Spannbacke auf den Spannbackenträger zu verschwenkt, wobei das Verschwenken um eine im Bereich der Hinterschnittverbindung angeordnete Achse vorgenommen wird und wobei die Spannbacke an dem Spannbackenträger mittels einer kraftschlüssigen und/oder formschlüssigen Fixierung fixiert wird.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte und Zwischenüberschriften beschränken die unter diesen gemachten Aussagen nicht in ihrer Allgemeingültigkeit.

### Kurzbeschreibung der Zeichnungen

Verschiedene Ausführungsformen der Erfindung sind in den Zeichnungen schematisch dargestellt und werden im folgenden näher erläutert. Die in den einzelnen Figuren gezeigten Ausführungsformen weisen teilweise Merkmale auf, die die anderen dargestellten Ausführungsformen der Erfindung nicht aufweisen oder in deren Zusammenhang nicht explizit beschrieben sind. Die Merkmale können jedoch, ohne den Rahmen der Erfindung zu verlassen, beliebig miteinander kombiniert werden. In den Zeichnungen zeigen:
- Fig. 1: eine isometrische teilgeschnittene Ansicht einer ersten Ausfüh- rungsform der erfindungsgemäßen Spanneinrichtung montiert auf einem Adapter,
- Fig. 2: eine geschnittene Seitenansicht der erfindungsgemäßen Spanneinrichtung gemäß Ebene II aus Fig. 1, teilweise in Exp- losionsdarstellung,
- Fig. 3: eine geschnittene Seitenansicht der erfindungsgemäßen Spanneinrichtung gemäß Ebene II in Fig. 1, in einem Montage- zustand,
- Fig. 4a: eine geschnittene Seitenansicht der erfindungsgemäßen Spanneinrichtung gemäß Ebene II in Fig. 1,
- Fig. 4b: eine geschnittene Seitenansicht der erfindungsgemäßen Spanneinrichtung gemäß Ebene I der Fig. 1,
- Fig. 5: eine isometrische Ansicht der erfindungsgemäßen Spannein- richtung gemäß einer zweiten Ausführungsform, montiert auf einem Adapter,
- Fig. 6: eine isometrische Ansicht der erfindungsgemäßen Spannein- richtung gemäß einer dritten Ausführungsform, montiert auf ei- nem Adapter,
- Fig. 7: eine isometrische Ansicht der erfindungsgemäßen Spannein- richtung gemäß einer vierten Ausführungsform, montiert auf ei- nem Adapter, sowie
- Fig. 8: eine isometrische Ansicht der erfindungsgemäßen Spannein- richtung gemäß einer fünften Ausführungsform, montiert auf ei- nem Adapter.

### Detaillierte Beschreibung der Zeichnungen

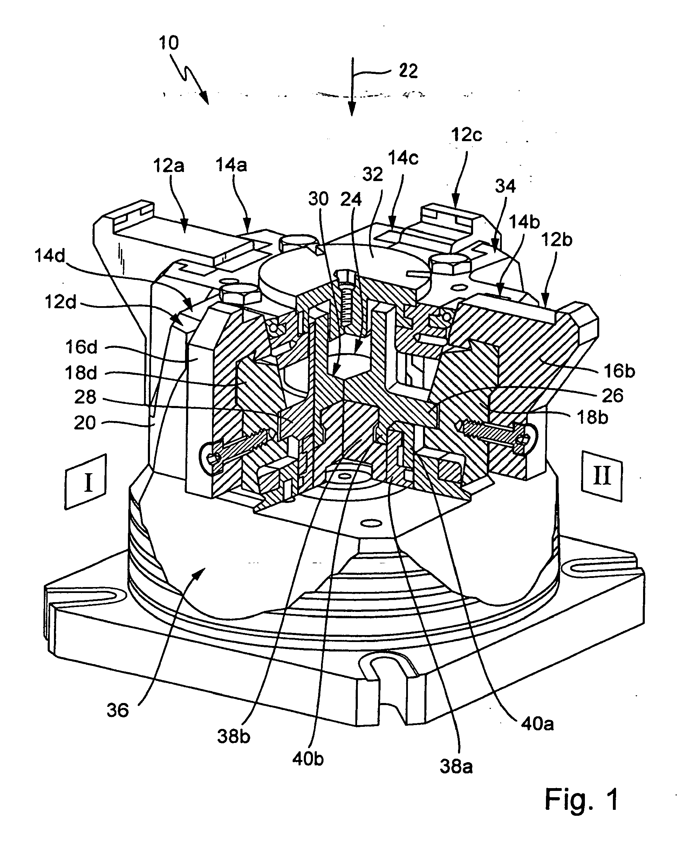

Die Fig. 1 zeigt eine Spanneinrichtung 10 mit vier Spannelementen 12a-d, die in zugeordneten Spannelementaufnahmen 14a-d aufgenommen sind. Die Spannelemente 12 bestehen unter anderem aus einer Spannbacke 16 sowie einem Spannbackenträger 18, die miteinander verbunden sind, wobei auf die Verbindung noch im Nachfolgenden eingegangen werden wird.

Die Spannelementaufnahmen 14 sind in einem Grundkörper 20 der Spanneinrichtung 10 vorgesehen. Die Spannelementaufnahmen 14 sind so ausgebildet, dass die Spannelemente 12 in und entgegengesetzt einer Spannrichtung 22 bewegbar sind. Der Grundkörper 20 weist eine zentrale Ausnehmung 24 auf, in der unter anderem ein erstes Kuppelteil 26 sowie ein zweites Kuppelteil 28 zur Bildung einer Kupplung 30 angeordnet sind. Die zentrale Ausnehmung 24 ist gemäß Fig. 1 mittels eines Verschlussstückes 32 verschlossen, das an einer Stirnseite 34 des Grundkörpers 10 vorgesehen ist.

Die Spanneinrichtung 10 ist auf einem Adapter 36 montiert. Der Adapter 36 weist adapterseitige Bajonettverschlussabschnitte 38a und 38b auf, die mit dem ersten Kuppelteil 26 bzw. dem zweiten Kuppelteil 28 in Eingriff stehen. Hierzu weisen die Kuppelteile 26, 28 spanneinrichtungsseitige Bajonettverschlussteile 40a und 40b auf.

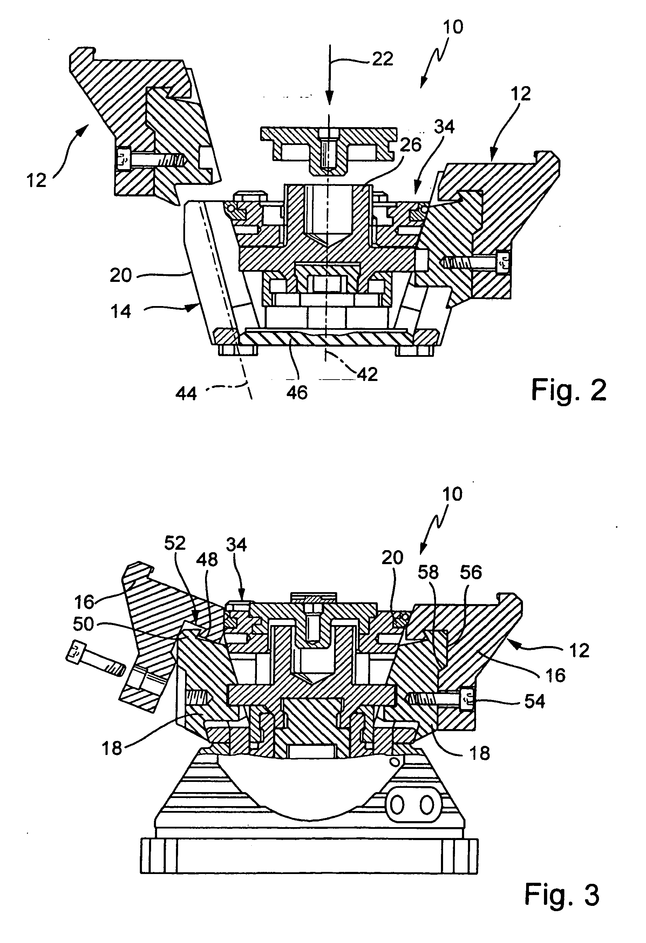

In der gemäß Ebene II der Fig. 1 geschnittenen Seitenansicht der Spanneinrichtung 10 in teilgeschnittener Darstellung ist zu erkennen, wie die Spannelementaufnahmen 14 für die Aufnahme der Spannelemente 12 ausgebildet sind und wie die Spannelemente 12 mit dem zugeordneten ersten Kuppelteil 26 in Eingriff stehen. Die Spannelementaufnahme 14 verläuft schräg zur Spannrichtung 22, wobei die Spannrichtung 22 parallel zu einer Mittellängsachse 42 der Spanneinrichtung 10 verläuft. Der schräge Verlauf der Spannelementaufnahmen 14 ist dabei so gewählt, dass sich Mittelachsen 44 der Spannelementaufnahmen auf einer der Stirnseite 34 des Grundkörpers 20 abgewandten Seite 46 schneiden. Dadurch wird erreicht, dass sich die Spannelemente 12, wenn sie mittels des ersten Kuppelteils 26 in Spannrichtung 22 bewegt werden, aufeinander zu bewegen, wodurch eine Spannwirkung auf einen in der Fig. 2 nicht dargestellten zu spannenden Gegenstand erzielt werden kann.

In der gemäß Ebene II der Fig. 1 geschnittenen Seitenansicht der Spanneinrichtung 10 ist zu erkennen, auf welche Weise eine Spannbacke 16 mit einem Spannbackenträger 18 zur Bildung des Spannelements 12 in Eingriff gebracht werden kann. Hierzu weist die Spannbacke 16 einen im wesentlichen bogenförmigen Aufbau auf, wobei die Spannbacke 16 in einem der Stirnseite 34 des Grundkörpers 20 zugewandten Endbereich einen hakenartigen Abschnitt 48 aufweist. Der hakenartige Abschnitt wird, wie in der linken Hälfte der Fig. 3 dargestellt, zu seiner Endposition verkippt mit einem hakenartigen Abschnitt 50 des Spannbackenträgers 18 in Eingriff gebracht, so dass eine Hinterschnittverbindung 52 entsteht.

Anschließend wird die Spannbacke 16 um eine Achse verschwenkt, die im Bereich der Hinterschnittverbindung 52 angeordnet ist, so dass die Spannbacke 16 in die im rechten Bereich der Fig. 3 dargestellte Position überführt wird. In der im rechten Bereich der Fig. 3 dargestellten Position wird die Spannbacke 16 mittels einer Fixierung 54, hier eine Verschraubung, an dem Spannbackenträger 18 fixiert. Es ist der Fig. 3 auch zu entnehmen, dass zumindest ein Abschnitt einer Innenkontur 56 der Spannbacke 16 so ausgebildet ist, dass sie zumindest an einem Abschnitt einer Außenkontur 58 des Spannbackenträgers 18 anliegt.

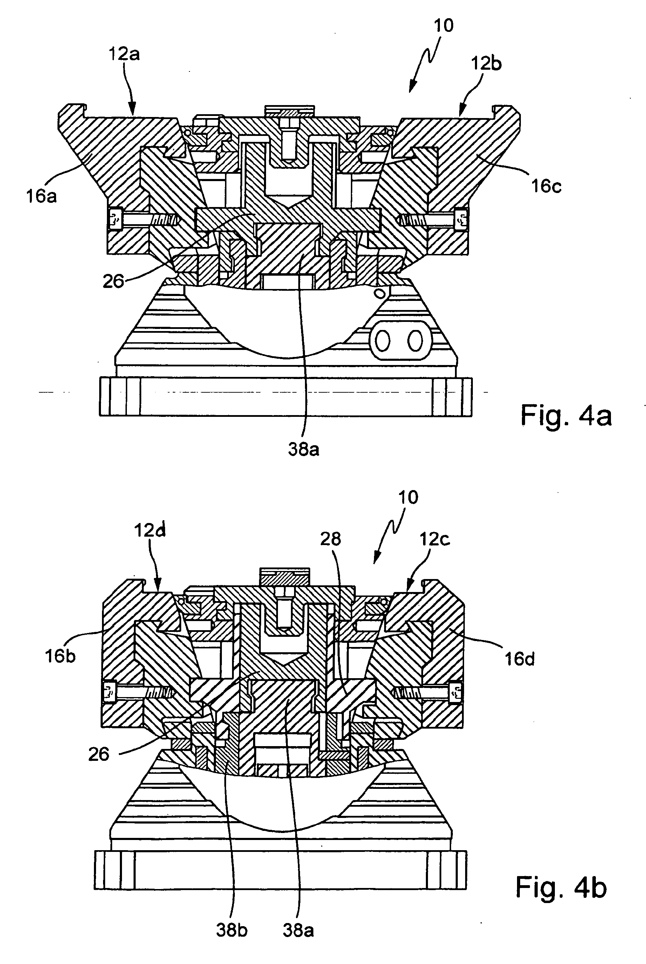

Die Fig. 4a und 4b zeigen jeweils Seitenansichten der erfindungsgemäßen Spanneinrichtung 10, wobei die Fig. 4a gemäß Ebene II in Fig. 1 und die Fig. 4b gemäß Ebene I in Fig. 1 geschnitten ist. Es ist zu erkennen, dass die Spannbacken 12a und 12b in Fig. 4a anders ausgebildet sind als die Spannbacken 12c und 12 d der Fig. 4b. In der gewählten Konfiguration gemäß Fig. 4 lässt sich beispielsweise ein zu spannendes Werkstück mit im Wesentlichen quaderförmig zueinander ausgerichteten Spannbereichen spannen. Insbesondere kann den Fig. 4a und 4b entnommen werden, dass die Spannelemente 12a und 12c mittels des ersten Kuppelteils 26 und die Spannelemente 12b und 12d der Fig. 4b mittels des zweiten Kuppelteils 28 verbunden sind. Dabei sind das erste Kuppelteil 26 und das zweite Kuppelteil 28 koaxial zueinander angeordnet. Es ist den Fig. 4a und 4b außerdem zu entnehmen, dass das erste Kuppelteil 26 mit einem ersten adapterseitigen Bajonettverschlussabschnitt 38a und dass das zweite Kuppelteil 28 mit einem zweiten adapterseitigen Bajonettverschlussabschnitt 38b verbunden ist. Dabei sind die adapterseitigen Bajonettverschlussabschnittsteile 38 unabhängig voneinander benutzbar bzw. bedienbar.

Durch diese paarweise Verbindung der Spannelemente 12 mittels des entsprechenden Kuppelteils 26, 28 und der Verbindung der Kuppelteile 26, 28 jeweils mit einem adapterseitigen Bajonettverschlussabschnitt 38 können die Spannelemente 12 jeweils paarweise und aufeinanderfolgend zum Erzeugen einer Spannwirkung bzw. beispielsweise zum Lösen der Spannwirkung bewegt werden. Selbstverständlich können die adapterseitigen Bajonettverschlussabschnittsteile 38 auch miteinander gekoppelt werden, so dass alle Spannelemente 12 gleichzeitig bewegt werden können.

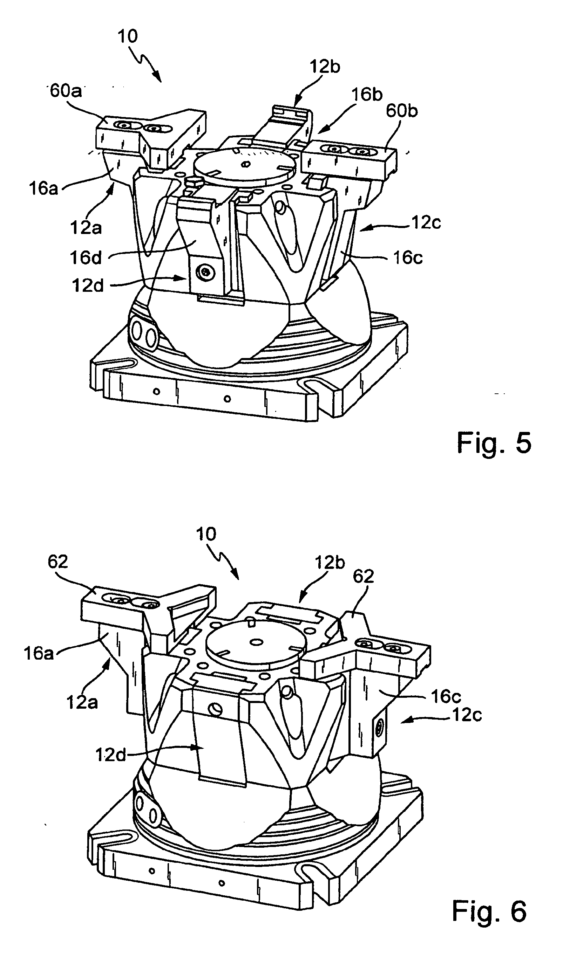

In der Fig. 5 ist die Spanneinrichtung 10 mit Spannelementen 12 versehen, die unterschiedlich ausgebildete Spannbacken 16a-d aufweisen, wobei die Spannbacken 16b und 16d im wesentlichen den vorstehend beschriebenen Spannbacken 16 entsprechen. Lediglich die Spannbacken 16a und 16c sind mit zusätzlichen Spannteilen versehen, die hier Ausrichtteile 60a und 60b sind und zwischen denen ein in Fig. 5 nicht dargestelltes, zu spannendes Werkstück ausgerichtet werden kann.

Eine alternative Möglichkeit der Ausgestaltung von Spannelementen 12 der erfindungsgemäßen Spanneinrichtung 10 ist in Fig. 6 dargestellt. Hier weisen die Spannelemente 12b und 12d keine Spannbacke auf, lediglich die Spannelemente 12a und 12c sind mit Spannbacken 16a und 16c versehen. Diese weisen im wesentlichen V-förmig ausgebildete Spannbereiche 62 auf.

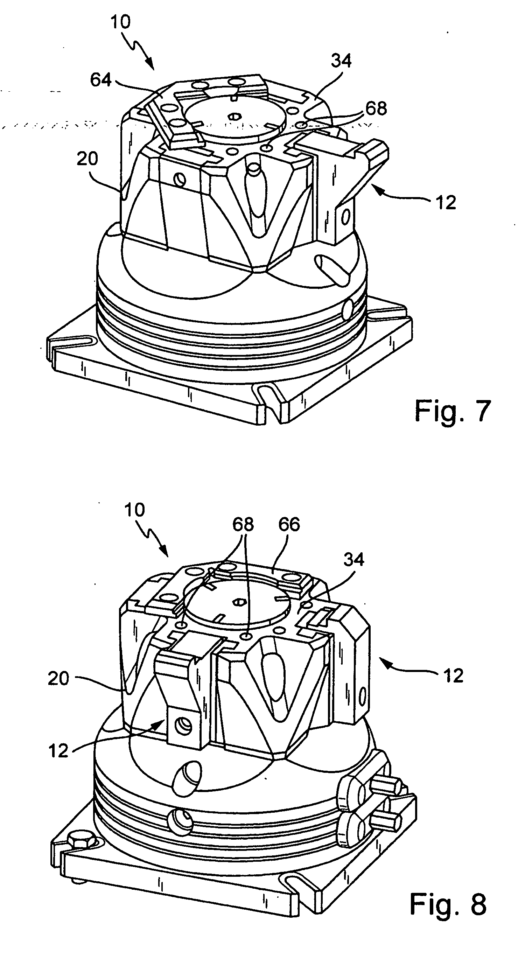

In Fig. 7 und Fig. 8 ist jeweils eine weitere Ausgestaltung der erfindungsgemäßen Spanneinrichtung 10 dargestellt. Im Unterschied zu den vorstehend beschriebenen Ausführungsformen ist hier jeweils eine Spannplatte 64 und 66 vorgesehen, die jeweils an der Stirnseite 34 des Grundkörpers 20 der Spanneinrichtung 10 befestigt ist. Der Grundkörper 20 ist hierzu mit Ausnehmungen 68 versehen, die jeweils ein nicht dargestelltes Innengewinde aufweisen. Die Spannplatten 64 und 66 können unterschiedlich ausgebildet sein, beispielsweise länglich, hier nicht dargestellt, oder winkelförmig. Je nach Anordnung der Spannplatten 64 und 66 ist eine unterschiedliche Anzahl von Spannelementen 12 für einen Spannvorgang vorzusehen.

## Patentansprüche

1. Spanneinrichtung (10) mit mehreren Spannelementaufnahmen (14) mit jeweils wenigstens einem von der Spannelementaufnahme (14) aufgenommenen Spannelement (12), wobei die Spannelementaufnahmen (14) wenigstens einen Bereich aufweist, der schräg zu einer Spannrichtung (22) der Spanneinrichtung (10) verläuft und mittels dem das wenigstens eine Spannelement (12) zumindest teilweise geführt ist, wobei das Spannelement (12) einen Spannbackenträger (18) sowie eine Spannbacke (16) aufweist, die mit dem Spannbackenträger (18) verbindbar ist, wobei die Spannbacke (16) im mit dem Spannbackenträger (18) verbundenen Zustand in einen am Spannbackenträger (18) vorgesehenen Hinterschnitt (52) eingreift und zusätzlich mittels einer kraftschlüssigen und/oder formschlüssigen Fixierung (54) an dem Spannbackenträger (18) fixiert ist, **dadurch gekennzeichnet, dass** die Spanneinrichtung (10) eine Kupplung (30) aufweist, die wenigstens ein erstes Kuppelteil (26) und ein zweites Kuppelteil (28) aufweist, wobei die Kuppelteile (26, 28) unabhängig voneinander und in jeweils verschiedene Spannbackenträger (18) eine Spannkraft einleiten..

2. Spanneinrithtung nach Anspruch 1, **dadurch gekennzeichnet, dass** die Hinterschnitte der Spannbackenträger (18) jeweils Spannkräfte aufnehmen, die im Wesentlichen parallel zur Fixierung (54) wirken.

3. Spanneinrichtung nach Anspruch 1 oder 2, **dadurch gekennzeichnet, dass** die Spannbacken (16) zumindest abschnittsweise im Wesentlichen hakenartig ausgebildet sind.

4. Spanneinrichtung nach einem der vorstehenden Ansprüche, **dadurch gekennzeichnet, dass** die Spanneinrichtung (10) mit einem Adapter (36) verbindbar ist, der hierzu adapterseitige Teile (38) eines Bajonettverschlusses aufweist.

5. Spanneinrichtung nach Anspruch 4, **dadurch gekennzeichnet, dass** das erste und das zweite Kuppelteil (26, 28) miteinander koppelbar sind und dass die Kupplung (30) spanneinrichtungsseitige Teile (40) eines Bajonettverschlusses aufweisen.

6. Spanneinrichtung nach Anspruch 5, **dadurch gekennzeichnet, dass** die Kuppelteile (26, 28) jeweils mit einem Abschnitt des adapterseitigen Bajonettverschlusses (38) verbindbar sind, der von für andere Kuppelteile (26, 28) vorgesehene Abschnitte des Bajonettverschlusses (38) unabhängig ist.

7. Spanneinrichtung nach einem der Ansprüche 3 bis 6, **dadurch gekennzeichnet, dass** die Kuppelteile (26, 28) eine Bewegung der Bajonettverschlussabschnitte (38) in oder entgegengesetzt der Spannrichtung auf die Spannbackenträger (18) übertragen.

8. Spanneinrichtung nach einem der vorstehenden Ansprüche, **dadurch gekennzeichnet, dass** eine gerade Anzahl von Spannelementaufnahmen (14) vorgesehen ist, vorzugsweise vier.

9. Spanneinrichtung nach Anspruch 8, **dadurch gekennzeichnet, dass** die Spannbackenträger (18) paarweise zum Erzeugen einer Spannwirkung antreibbar sind.

10. Spanneinrichtung nach Anspruch 8, **dadurch gekennzeichnet, dass** die Spannbackenträger (18) insgesamt zum Erzeugen einer Spannwirkung antreibbar sind.

11. Spanneinrichtung nach einem der vorstehenden Ansprüche, **dadurch gekennzeichnet, dass** die Spanneinrichtung (10) einen Grundkörper (20) aufweist, der an einer einem zu spannenden Werkstück zugewandten Stirnseite (34) für die im Wesentlichen unbewegliche Aufnahme von Gegenstücken (60, 64, 66) zu den Spannbacken (16) ausgebildet ist.

12. Spanneinrichtung nach Anspruch 11, **dadurch gekennzeichnet, dass** der Grundkörper (20) eine zentrale Ausnehmung (24) wenigstens für die Aufnahme der Kupplungsteile (26, 28) aufweist, wobei die Ausnehmung (24) mittels eines Verschlussstückes (32) verschließbar ist.

13. Spanneinrichtung nach einem der vorstehenden Ansprüche, **dadurch gekennzeichnet, dass** die Spannbacke (16) im Wesentlichen bogenförmig ist, wobei an einem Endbereich des Bogens ein hakenartiger Abschnitt (48, 50) für den Eingriff in den Hinterschnitt (52) des Spannbackenträgers (18) vorgesehen ist, wobei sich der hakenartige Abschnitt (48, 50) in einen vom Bogen umschlossenen Bereich erstreckt, vorzugsweise in eine dem Verlauf des Bogens entgegengesetzte Richtung.

14. Verfahren zum Verbinden einer Spannbacke mit einem Spannbackenträger einer Spanneinrichtung (10) nach einem der vorstehenden Ansprüche, mit den Schritten
a. Einhaken der die Hinterschnittverbindung (52) bildenden Bereiche der Spannbacke (16) und des Spannbackenträgers (18),
b. Verschwenken der Spannbacke (16) auf den Spannbackenträger (18) zu, wobei das Verschwenken um eine im Bereich der Hinterschnittverbindung (52) angeordneten Achse vorgenommen wird,
c. Fixieren der Spannbacke an dem Spannbackenträger (18) mittels einer kraftschlüssigen und/oder formschlüssigen Fixierung (54).

## Claims

1. A clamping device (10) with several clamping element receptacles (14) each having at least one clamping element (12) held by said clamping element receptacle (14), where said clamping element receptacles (14) have at least one area running obliquely to a clamping direction (22) of said clamping device (10) and by means of which said at least one clamping element (12) is at least partially guided, wherein said clamping element (12) has a clamping jaw support (18) and a clamping jaw (16) connectable to said clamping jaw support (18), wherein said clamping jaw (16) engages in an undercut (52) provided on said clamping jaw support (18) when in said state connected to said clamping jaw support and is additionally fixed by means of a non-positive and/or positive fixing means (54) to said clamping jaw support (18), **characterized in that** said clamping device (10) has a coupling device (30) having at least a first coupling part (26) and a second coupling part (28), wherein said coupling parts (26, 28) transmit a clamping force independently of one another and into different clamping jaw supports (18).

2. The clamping device according to Claim 1, **characterized in that** said undercuts of said clamping jaw supports (18) each absorb clamping forces acting substantially parallel to said fixing means (54).

3. The clamping device according to Claim 1 or 2, **characterized in that** said clamping jaws (16) are designed substantially hook-like, at least sectionally.

4. The clamping device according to any of the preceding Claims, **characterized in that** said clamping device (10) is connectable to an adapter (36), wherein said adapter has parts (38) of a bayonet mount on an adapter side.

5. The clamping device according to Claim 4, **characterized in that** said first and second coupling parts (26, 28) can be coupled to one another and wherein said coupling (30) has parts (40) of a bayonet mount on a clamping device side.

6. The clamping device according to Claim 5, **characterized in that** said coupling parts (26, 28) are each connectable to a section of said bayonet mount (38) on said adapter side being independent of those sections of said bayonet mount (38) provided for other coupling parts (26, 28).

7. The clamping device according to any of Claims 3 to 6, **characterized in that** said coupling parts (26, 28) are designed such that they transmit a movement of said bayonet mount sections (38) along or opposite to said clamping direction to said clamping jaw supports (18).

8. The clamping device according to any of the preceding Claims, **characterized in that** an even number, preferably four of said clamping element receptacles (14) are provided.

9. The clamping device according to Claim 8, **characterized in that** said clamping jaw supports (18) can be driven in pairs to generate a clamping effect.

10. The clamping device according to Claim 8, **characterized in that** said clamping jaw supports (18) can be driven in total to generate a clamping effect.

11. The clamping device according to any of the preceding Claims, **characterized in that** said clamping device (10) has a basic element (20) that is designed for the substantially immovable holding of counter-pieces (60, 64, 66) to said clamping jaws (16) on a front end (34) facing a workpiece to be clamped.

12. The clamping device according to Claim 11, **characterized in that** said basic element (20) has a central recess (24) at least for receiving said coupling parts (26, 28), wherein said recess (24) is closable by means of a cover piece (32).

13. The clamping device according to any of the preceding Claims, **characterized in that** said clamping jaw (16) is substantially arc-shaped, wherein a hook-like section (48, 50) is provided at an end region of said arc for engaging in said undercut (52) of said clamping jaw support (18), wherein said hook-like section (48, 50) extends in a hook-part enclosed by said arc, preferably said hook-like section extends in a direction opposite to a course of said arc.

14. A method for connecting a clamping jaw to a clamping jaw support of said clamping device (10) according to any of the preceding Claims, comprising the steps:
a. hooking in of said clamping jaw (16) and of said clamping jaw support (18) forming said undercut connection (52),
b. pivoting of said clamping jaw (16) towards said clamping jaw support (18), wherein said pivoting takes place about an axis arranged near said undercut connection (52),
c. fixing of said clamping jaw to said clamping jaw support (18) by means of a non-positive and/or positive fixing means (54).

## Revendications

1. Dispositif de serrage (10) comprenant plusieurs logements d'éléments de serrage (14) ayant chacun au moins un élément de serrage (12) reçu par le logement d'éléments de serrage (14), les logements d'éléments de serrage (14) présentant au moins une région qui s'étend obliquement par rapport à une direction de serrage (22) du dispositif de serrage (10) et au moyen de laquelle l'au moins un élément de serrage (12) est guidé au moins en partie, l'élément de serrage (12) présentant un support de mâchoire de serrage (18) ainsi qu'une mâchoire de serrage (16), qui peut être connectée au support de mâchoire de serrage (18), la mâchoire de serrage (16), dans l'état connecté au support de mâchoire de serrage (18), venant en prise dans une contre-dépouille (52) prévue sur le support de mâchoire de serrage (18) et étant en outre fixée au moyen d'une fixation (54) par force et/ou par coopération de formes sur le support de mâchoire de serrage (18), **caractérisé en ce que** le dispositif de serrage (10) présente un accouplement (30) qui présente au moins une première partie d'accouplement (26) et une deuxième partie d'accouplement (28), les parties d'accouplement (26, 28) appliquant une force de serrage indépendamment l'une de l'autre et dans des supports de mâchoire de serrage respectifs différents (18).

2. Dispositif de serrage selon la revendication 1, **caractérisé en ce que** les contre-dépouilles des supports de mâchoire de serrage (18) reçoivent à chaque fois des forces de serrage qui agissent essentiellement parallèlement à la fixation (54).

3. Dispositif de serrage selon la revendication 1 ou 2, **caractérisé en ce que** les mâchoires de serrage (16) sont réalisées au moins en partie essentiellement en forme de crochet.

4. Dispositif de serrage selon l'une quelconque des revendications précédentes, **caractérisé en ce que** le dispositif de serrage (10) peut être connecté à un adaptateur (36) qui présente à cet effet des parties (38) d'une fermeture à baïonnette du côté de l'adaptateur.

5. Dispositif de serrage selon la revendication 4, **caractérisé en ce que** la première et la deuxième partie d'accouplement (26, 28) peuvent être accouplées l'une à l'autre et **en ce que** l'accouplement (30) présente des parties (40) d'une fermeture à baïonnette du côté du dispositif de serrage.

6. Dispositif de serrage selon la revendication 5, **caractérisé en ce que** les parties d'accouplement (26, 28) peuvent être à chaque fois connectées à une section de la fermeture à baïonnette (38) du côté de l'adaptateur, cette section étant indépendante des sections de la fermeture à baïonnette (38) prévues pour d'autres parties d'accouplement (26, 28).

7. Dispositif de serrage selon l'une quelconque des revendications 3 à 6, **caractérisé en ce que** les parties d'accouplement (26, 28) transmettent un mouvement des sections de fermeture à baïonnette (38) dans la direction de serrage ou dans la direction opposée aux supports de mâchoire de serrage (18).

8. Dispositif de serrage selon l'une quelconque des revendications précédentes, **caractérisé en ce qu'**un nombre pair de logements d'éléments de serrage (14) est prévu, de préférence quatre.

9. Dispositif de serrage selon la revendication 8, **caractérisé en ce que** les supports de mâchoire de serrage (18) peuvent être entraînés par paire pour produire un effet de serrage.

10. Dispositif de serrage selon la revendication 8, **caractérisé en ce que** les supports de mâchoire de serrage (18) peuvent être entraînés tous ensemble pour produire un effet de serrage.

11. Dispositif de serrage selon l'une quelconque des revendications précédentes, **caractérisé en ce que** le dispositif de serrage (10) présente un corps de base (20) qui est réalisé sur un côté frontal (34) tourné vers une pièce à serrer pour le logement essentiellement immobile de pièces conjuguées (60, 64, 66) aux mâchoires de serrage (16).

12. Dispositif de serrage selon la revendication 11, **caractérisé en ce que** le corps de base (20) présente un évidement central (24) au moins pour recevoir les parties d'accouplement (26, 28), l'évidement (24) pouvant être fermé au moyen d'une pièce de fermeture (32).

13. Dispositif de serrage selon l'une quelconque des revendications précédentes, **caractérisé en ce que** la mâchoire de serrage (16) est sensiblement de forme courbe, une section de type crochet (48, 50) étant prévue au niveau d'une région d'extrémité de la courbe, pour l'engagement dans la contre-dépouille (52) du support de mâchoire de serrage (18), la section de type crochet (48, 50) s'étendant dans une région entourée par la courbe, de préférence dans une direction opposée à l'allure de la courbe.

14. Procédé pour connecter une mâchoire de serrage à un support de mâchoire de serrage d'un dispositif de serrage (10) selon l'une quelconque des revendications précédentes, comprenant les étapes suivantes :
a. accrochage des régions de la mâchoire de serrage (16) et du support de mâchoire de serrage (18) formant la connexion à contre-dépouille (52),
b. pivotement de la mâchoire de serrage (16) vers le support de mâchoire de serrage (18), le pivotement étant effectué autour d'un axe disposé dans la région de la connexion à contre-dépouille (52),
c. fixation de la mâchoire de serrage sur le support de mâchoire de serrage (18) au moyen d'une fixation (54) par force et/ou par coopération de forme.
